# EUROPEAN PATENT SPECIFICATION

(11) **EP 1 026 454 B1**
(45) Date of publication and mention of the grant of the patent: **26.04.2006**
(21) Application number: 00300835.6
(22) Date of filing: 03.02.2000
(51) Int. Cl.: F24H 8/00, F24H 1/40, F28F 19/06, F28F 1/24

(54) **Heat exchanger apparatus**
Wärmetauscher
Echangeur de chaleur

(30) Priority: 04.02.1999 JP 2774499; 19.01.2000 JP 2000009811
(43) Date of publication of application: 09.08.2000
(73) Proprietor: RINNAI KABUSHIKI KAISHA, Nagoya-shi, Aichi-ken (JP)
(72) Inventor: Sobue, Tsutomu, c/o Rinnai Kabushiki Kaisha, Nagoya-shi, Aichi-ken (JP); Fukaya, Takeshi, c/o Rinnai Kabushiki Kaisha, Nagoya-shi, Aichi-ken (JP); Koshimizu, Daisuke, Yokohama-shi, Kanagawa-ken (JP)
(74) Representative: Fenlon, Christine Lesley

(56) References cited:
- DE-A- 3 914 746
- DE-U- 9 420 878
- FR-A- 2 351 372
- GB-A- 415 609
- PATENT ABSTRACTS OF JAPAN vol. 1995, no. 10, 30 November 1995 (1995-11-30) & JP 07 167586 A (RINNAI CORP), 4 July 1995 (1995-07-04)
- PATENT ABSTRACTS OF JAPAN vol. 1996, no. 02, 29 February 1996 (1996-02-29) & JP 07 253281 A (MATSUSHITA ELECTRIC IND CO LTD), 3 October 1995 (1995-10-03)
- PATENT ABSTRACTS OF JAPAN vol. 1995, no. 10, 30 November 1995 (1995-11-30) & JP 07 167582 A (RINNAI CORP), 4 July 1995 (1995-07-04)

## Description

The present invention relates to a heat exchanger apparatus having heat exchangers disposed in a passage for guiding exhaust gases discharged from a combustion device. In particular the present invention relates to a heat exchanger apparatus having a main heat exchanger for absorbing sensible heat from exhaust gases discharged from a combustion device and an auxiliary heat exchanger for absorbing remaining sensible heat and latent heat from the exhaust gases from which the sensible heat has been absorbed by the main heat exchanger.

There has been known in the art a heat exchanger apparatus having a main heat exchanger, disposed in an upstream position in a passage for guiding exhaust gases discharged from a combustion device, for absorbing sensible heat from the exhaust gases, and an auxiliary heat exchanger disposed in a downstream position in the passage for absorbing remaining sensible heat and latent heat from the exhaust gases from which the sensible heat has been absorbed by the main heat exchanger.

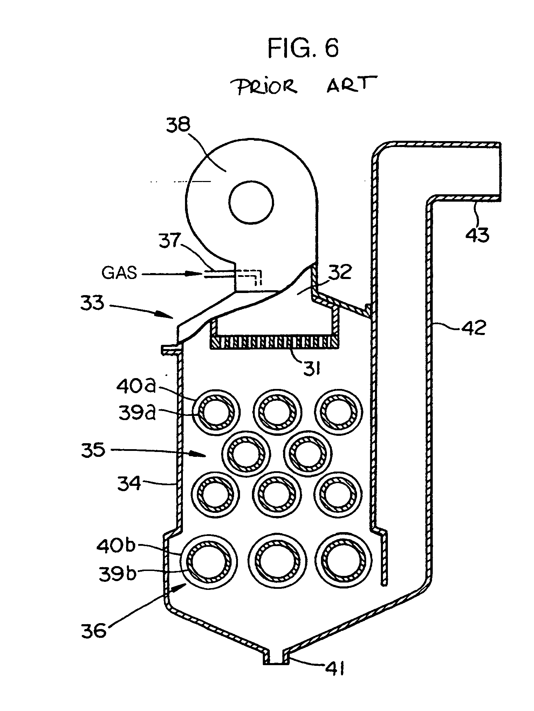

As shown in FIG. 6 of the accompanying drawings, the known heat exchanger apparatus includes a combustion device 33 disposed in an upper portion thereof and having a gas burner 31 and a mixed gas supply unit 32 for mixing a fuel gas and combustion air at a predetermined ratio into a mixed gas and supplying the mixed gas to the gas burner 31, a main heat exchanger 35 disposed in an upper portion of a casing 34 connected to and extending downwardly from the combustion device 33 as a passage for exhaust gases discharged from the gas burner 31, and an auxiliary heat exchanger 36 disposed in a lower portion of the casing 34. The fuel gas is supplied to the mixed gas supply unit 32 by a gas pipe 37, and the combustion air is supplied to the mixed gas supply unit 32 by an air fan 38.

The main heat exchanger 35 and the auxiliary heat exchanger 36 comprise respective sets of water pipes 39a, 39b, and respective sets of heat-absorbing fins 40a, 40b disposed around the water pipes 39a, 39b. The water pipes 39b are connected to a water supply system pipe or the like via a water supply pipe and a water supply valve (not shown). While water supplied from the water supply pipe is flowing from the water pipes 39b to the water pipes 39a, the water is heated by the main heat exchanger 35 and the auxiliary heat exchanger 36, and then discharged from a hot water pipe (not shown) connected to the water pipes 39a.

In the heat exchanger apparatus, the gas burner 31 discharges exhaust gases downwardly. The discharged exhaust gases are brought into contact with the water pipes 39a and the heat-absorbing fins 40a of the main heat exchanger 35 disposed below the gas burner 31, and sensible heat of the exhaust gases is absorbed thereby. Then, the exhaust gases are brought into contact with the water pipes 39b and the heat-absorbing fins 40b of the auxiliary heat exchanger 36 disposed below the main heat exchanger 35, which absorb remaining sensible heat and latent heat that have not been absorbed by the main heat exchanger 35. Since the heat exchanger apparatus absorbs not only the sensible heat but also the latent heat from the exhaust gases, the heat exchanger apparatus provides an excellent heat exchange efficiency.

When the exhaust gases are deprived of the latent heat by the auxiliary heat exchanger 36, water vapor contained in the exhaust gases is liquefied into a drain, which is discharged out of a drain port 41 defined in the bottom of the casing 34. The cooled exhaust gases are discharged out of a gas outlet 43 via a gas discharge pipe 42 connected to a lower portion of the casing 34.

In the ordinary heat exchangers, the water pipes 39a, 39b and the heat-absorbing fins 40a, 40b are made of copper or copper alloy having high heat conductivity. However, since the drain produced by the auxiliary heat exchanger 36 exhibits strong acidity because it contains sulfur oxides and nitrogen oxides dissolved from the exhaust gases, if the water pipes 39b and the heat-absorbing fins 40b are made of copper or copper alloy, then they are corroded by the strongly acid drain and have a relatively short service life.

To solve the above problem, there has been proposed a heat exchanger apparatus whose water pipes 39a, 39b and heat-absorbing fins 40a, 40b are made of an aluminum alloy. When an aluminum-based metal is oxidized in air, it forms an oxide film on its surface which protects an inner non-oxidized portion of the aluminum-based metal against oxidization. The oxide film is capable of restoring itself even when it is partly peeled off, and becomes thicker at higher temperatures. Therefore, the aluminum-based metal has an excellent corrosion resistance against the strongly acid drain.

However, if all the water pipes 39a, 39b and the heat-absorbing fins 40a, 40b of the main and auxiliary heat exchangers 35, 36 are made of an aluminum-based metal such as an aluminum alloy, then because the aluminum-based metal has a lower heat conductivity than copper-based metals such as copper and copper alloys, the heat exchanger apparatus tends to be large in size in order to achieve the desired heat exchange efficiency. Another problem is that it is expensive to manufacture the heat exchanger apparatus because aluminum-based metals are more expensive than copper-based metals.

Japanese laid-open patent publication No. 7-167586 proposes a heat exchanger apparatus in which the water pipes 39b and the heat-absorbing fins 40b of the auxiliary heat exchanger 36 are made of aluminum alloy and the water pipes 39a and the heat-absorbing fins 40a of the main heat exchanger 35 which produces no drain is produced are made of copper or copper alloy having high heat conductivity. With this arrangement, any unwanted corrosion of the water pipes 39b and the heat-absorbing fins 40b by the strongly acid drain is reduced, and the main heat exchanger 35 can be made compact. Inasmuch as the main heat exchanger 35 can be made compact, the heat exchanger apparatus can be reduced in size. The heat exchanger apparatus can be manufactured relatively inexpensively as the main heat exchanger 35 is made of copper or copper alloy that is cheaper than aluminum alloy.

However, if the water pipes 39b of the auxiliary heat exchanger 36 are made of aluminum-based metal such as aluminum alloy and the water pipes 39a of the main heat exchanger 35 are made of copper or copper alloy, then the different metals are held in contact with each other at the inner surfaces of the joints of the water pipes 39a, 39b, and cooperate with water flowing through the water pipes 39a, 39b in making up a partial cell, which is liable to cause electrochemical corrosion.

It is therefore an object of the present invention to provide a heat exchanger apparatus which can be reduced in size and cost and alleviates problems associated with electro-chemical corrosion due to the formation of a partial cell and corrosion.

JP07-167586A discloses a heat exchanger apparatus according to the preamble of claim 1.

To achieve the above object, there is provided heat exchanger apparatus comprising: a combustion device; a casing connected to said combustion device which serves as a passage for guiding exhaust gases discharged from said combustion device; a main heat exchanger disposed in an upstream position in said passage and comprising a first water pipe and a plurality of first heat-absorbing fins for absorbing sensible heat from the exhaust gases; an auxiliary heat exchanger disposed in a down-stream position in said passage and comprising a second water pipe connected to said first water pipe and a plurality of second heat-absorbing fins disposed around said second water pipe, for absorbing remaining sensible heat and latent heat from the exhaust gases; water supply means for supplying water to said auxiliary heat exchanger; and hot water discharging means for discharging hot water from said main heat exchanger; characterised in that said auxiliary heat exchanger further comprises a plurality of fin tubes which are disposed between said second water pipe(s) and said second heat absorbing fins wherein said fin tubes and said second heat-absorbing fins are made of an aluminium based metal and said first and second water pipes are made of the same copper based metal.

The copper-based metal may be pure copper or a copper alloy containing copper as a main constituent, and the aluminum-based metal may be pure aluminum or an aluminum alloy containing aluminum as a main constituent.

Exhaust gases produced by the combustion device are guided to the main heat exchanger, which removes sensible heat from the exhaust gases with the first water pipe and the first heat-absorbing fins. Then, the exhaust gases are delivered to the auxiliary heat exchanger, which removes remaining sensible heat and latent heat from the exhaust gases with the fin tubes and the second heat-absorbing fins. The heat absorbed by the fin tubes and the second heat-absorbing fins is transferred to the second water pipe fitted in the fin tube. As a result, the water supplied from the water supply means to the auxiliary heat exchanger is heated while flowing through the second water pipe and the first water pipe, and discharged from the main heat exchanger by the hot water discharging means.

Since the latent heat is absorbed from the exhaust gases, water vapor contained in the exhaust gases is liquefied into a drain which is strongly acid because of sulfur oxides and nitrogen oxides dissolved from the exhaust gases. However, because the fine tubes and the second heat-absorbing fins of the auxiliary heat exchanger are made of the aluminum-based metal, an oxide film formed on their surfaces is effective to protect inner non-oxidized portions thereof against corrosion due to the drain. The fin tubes made of the aluminum-based metal is also effective to protect the second water pipe, which is made of the copper-based metal and fitted in the fin tube, from the drain for resistance to corrosion.

Inasmuch as the second water pipe is made of the same copper-based metal as the first water pipe, the same metal is held in contact with each other at the junction between the first and second water pipes. Therefore, no partial cell is formed at the junction between the first and second water pipes, which are prevented from being electrochemically corroded.

The copper-based metal, which the first water pipe and the first heat-absorbing fins are made of, has greater heat conductivity than the aluminum-based metal. Therefore, the main heat exchanger may be reduced in size. The copper-based metal is cheaper than the aluminum-based metal. Consequently, the main heat exchanger may be manufactured relatively inexpensively.

In order to protect the second water pipe against corrosion due to the drain and transfer the heat absorbed from the exhaust gases efficiently to the second water pipe, the fin tubes should preferably have a wall thickness ranging from 2 to 10 mm. If the wall thickness of the fin tube were less than 2 mm, then the ability of the fin tube to protect the second water pipe against corrosion due to the drain would decrease with time, and the fine tubes would not remain durable enough for a long period of time. If the wall thickness of the fin tubes exceeded 10 mm, then the fin tubeswould fail to transfer sufficient heat to the second water pipe.

The casing comprises a first casing member made of a copper-based metal and housing the main heat exchanger and a second casing member made of an aluminum-based metal and housing the auxiliary heat exchanger, the second casing member being connected to the first casing member with an insulating gasket interposed therebetween. The second casing member which houses the auxiliary heat exchanger should preferably be made of an aluminum-based metal for protection against corrosion due to the drain. Since no drain is produced at the main heat exchanger, the first casing member does not need to be made of an expensive aluminum-based metal, but may be made of a copper-based metal. The first casing member made of a copper-based metal allows itself to be reduced in size and manufactured at a reduced cost.

In the case where the first casing member is made of the copper-based metal and the second casing member is made of the aluminum-based metal, these different metals would contact each other and form a partial cell at their junction. However, the insulating gasket disposed between the first and second casing members is effective to prevent such a partial cell from being formed and also to prevent the first and second casing members from being electrochemically corroded.

If the exhaust gases leaked out of the second casing member, they would condense a strongly acid drain on members such as pipes, tending to cause corrosion to those members. In order to prevent the exhaust gases from leaking out of the second casing member, the fin tubes should preferably be held in intimate contact with the outer edges of attachment holes defined in the second casing member.

Specifically, gaskets may be disposed between the fin tube and the outer edges of attachment holes. Alternatively, the fin tubes may have opposite ends spread radially outwardly and crimped in place in respective attachment holes defined in the second casing member. The latter structure can easily be achieved inexpensively as no additional material is required.

However, if the fin tubes and the second casing member were made of different metals, they would form a partial cell in a region where the opposite ends of the fin tubes are crimped in place in the attachment holes. Therefore, if the opposite ends of the fin tubes are to be crimped in place in the attachment holes, then the second casing member needs to be made of the same aluminum-based metal as the fin tubes.

The above and other objects, features, and advantages of the present invention will become apparent from the following description when taken in conjunction with the accompanying drawings which illustrate a preferred embodiment of the present invention by way of example.

### BRIEF DESCRIPTION OF THE DRAWINGS

FIG. 1 is a schematic elevational view of a heat exchanger apparatus according to the present invention;
FIG. 2 is a cross-sectional view taken along line II - II of FIG. 1;
FIG. 3 is an elevational view, partly in cross section, of a fin tube;
FIGS. 4(a) and 4(b) are fragmentary cross-sectional views showing the manner in which a fin tube is attached to a casing;
FIG. 5 is an elevational view, partly in cross section, of a fin tube with a second water pipe fitted therein; and
FIG. 6 is a cross-sectional view of a conventional heat exchanger apparatus.

### DETAILED DESCRIPTION OF THE PREFERRED EMBODIMENTS

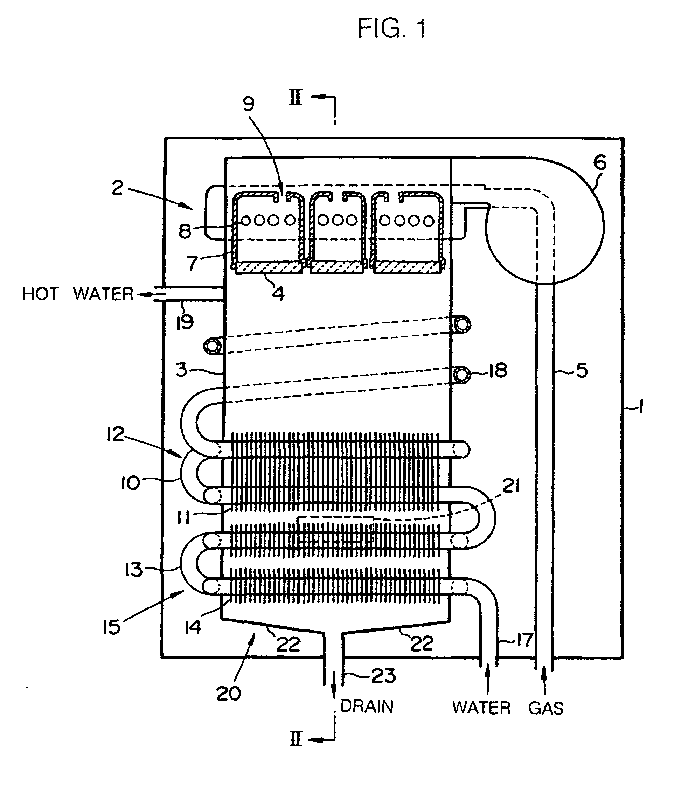

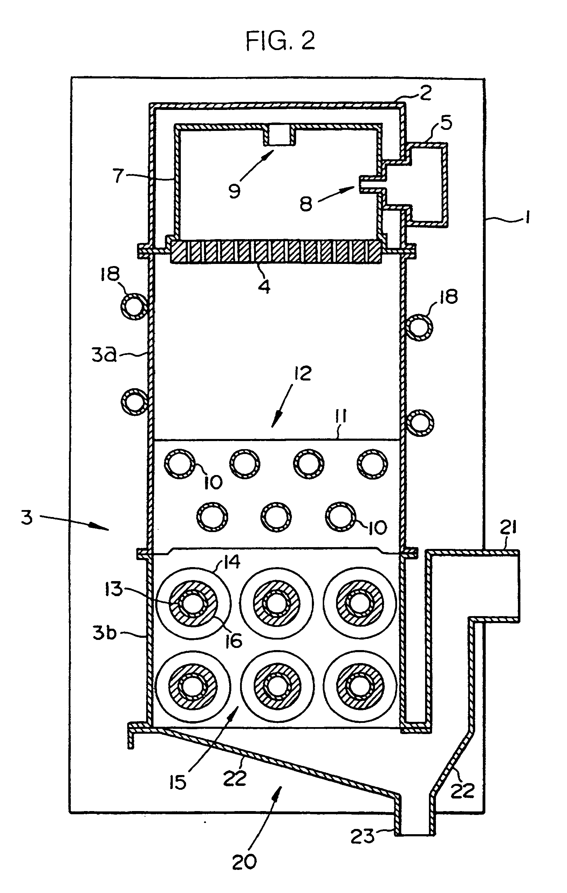

As shown in FIGS. 1 and 2, a heat exchanger apparatus according to the present invention comprises a combustion device 2 disposed in an upper portion of a housing 1 and a casing 3 joined to the combustion device 2 and serving as a passage for guiding exhaust gases discharged from the combustion device 2.

The combustion device 2 comprises a gas burner 4 made of porous ceramics or the like, and a mixed gas supply unit 7 for mixing a fuel gas supplied from a gas pipe 5 and combustion air supplied from an air fan 6 at a predetermined ratio into a mixed gas and supplying the mixed gas to the gas burner 4. The mixed gas supply unit 7 is in the form of a downwardly open box, with the gas burner 4 disposed in the lower opening thereof. The mixed gas supply unit 7 has a plurality of nozzles 8 defined in a rear wall thereof for ejecting the fuel gas and a plurality of air ports 9 defined in an upper wall thereof for supplying the combustion air. The gas burner 4 is ignited by an igniter or the like (not shown) to burn the mixed gas, and discharges exhaust gases downwardly into the casing 3.

The casing 3, which serves as the passage for guiding the exhaust gases, comprises, as shown in FIG. 2, a first casing member 3a connected to the lower end of the combustion device 2 and a second casing member 3b connected to the lower end of the first casing member 3a.

The first casing member 3a, which is located upstream in the passage for guiding the exhaust gases, is made of copper, and houses a first water pipe 10 and first heat-absorbing fins 11 that jointly make up a main heat exchanger 12 for primarily absorbing sensible heat from the exhaust gases. The water pipe 10 is bent outside of the first casing member 3a and arranged in two upper and lower pipe layers. In the upper pipe layer, the water pipe 10 provides four pipe lengths, and in the lower pipe layer, the water pipe 10 provides three pipe lengths. As shown in FIG. 2, the first heat-absorbing fins 11 comprise parallel vertical plates extending from a front inner wall surface of the first casing member 3a to a rear inner wall surface thereof. The seven water pipe lengths 10 in the upper and lower pipe layers extend through each of the first heat-absorbing fins 11.

The second casing member 3b, which is located downstream in the passage for guiding the exhaust gases, is made of aluminum-based metal, and is connected to the lower end of the first casing member 3a with an insulating gasket (not shown) interposed therebetween. In the junction between the first and second housing members 3a, 3b, the exhaust gases are of a high temperature hither than the dew point of water vapor. Therefore, the insulating gasket is made of glass wool or the like which is highly resistant to heat.

The second casing member 3b houses a second water pipe 13 of copper connected to the first water pipe 10, and second heat-absorbing fins 14 made of aluminum-based metal. The second water pipe 13 and the second heat-absorbing fins 14 jointly make up an auxiliary heat exchanger 15 for absorbing remaining sensible heat and latent heat from the exhaust gases from which the sensible heat has been absorbed by the main heat exchanger 12. As shown in FIG. 2, the heat-absorbing fins 14 comprise parallel vertical circular plates and are integrally mounted on fin tubes 16 made of the same aluminum-based metal as the heat-absorbing fins 14. The water pipe 13 is fitted in the fin tubes 16.

The water pipe 13 is bent outside of the second casing member 3b and arranged in two upper and lower pipe layers. In each of the upper and lower pipe layers, the water pipe 13 provide three pipe lengths. Each of the heat-absorbing fins 14 has as large a size as possible, but is kept out of contact with adjacent heat-absorbing fins 14 and the inner wall of the second casing member 3b.

The aluminum-based metal of the second casing member 3b, the heat-absorbing fins 14, and the fin tubes 16 may be pure aluminum or an aluminum alloy containing aluminum as a main constituent. While the aluminum alloy may have any desired composition, it may be an aluminum alloy listed as aluminum No. A6063 under JIS H 4040 (0.20 - 0.6 % of Si, 0.35 % or less of Fe, 0.10 % or less of Cu, 0.10 % or less of Mn, 0.45 - 0.9 % of Mg, 0.10 % or less of Cr, 0.10 % or less of Zn, 0.10 % or less of Ti, and 0.15 % of other elements each in 0.06 % or less, and the remainder of Al).

The auxiliary heat exchanger 15 is supplied with water from a water supply pipe 17 of copper which communicates with the second water pipes 13. The water supply pipe 17 is connected via a water supply valve (not shown) to a water supply system pipe, and serves as a water supply means. Between the combustion device 2 and the main heat exchanger 12, there is disposed a third water pipe 18 communicating with the upper end of the water pipe 10 and disposed around the first casing member 3a in contact with an outer wall surface thereof. A hot water discharge pipe 19 connected to the third water pipe 18 serves as a hot water discharging means for discharging hot water from the main heat exchanger 12. Hot water discharged from the main heat exchanger 12 is supplied via the hot water discharge pipe 19 to a kitchen, a bath room, or the like.

An exhaust gas tube 20 of stainless steel is connected to the bottom of the second casing member 3b with an insulating gasket (not shown) interposed therebetween. The exhaust gas tube 20 has a portion raised behind and along the second casing member 3b, and having a gas outlet 21 defined in an upper end thereof for discharging out the exhaust gases. At the bottom of the second casing member 3b, the exhaust gases are cooled to the dew point of water vapor. Therefore, the insulating gasket may be made of synthetic rubber such as silicone rubber, EPDM, etc. The exhaust gas tube 20 has a slanted surface 22 on its bottom, and has a drain port 23 defined in the lowermost end thereof for discharging a drain which is produced in the second casing member 3b.

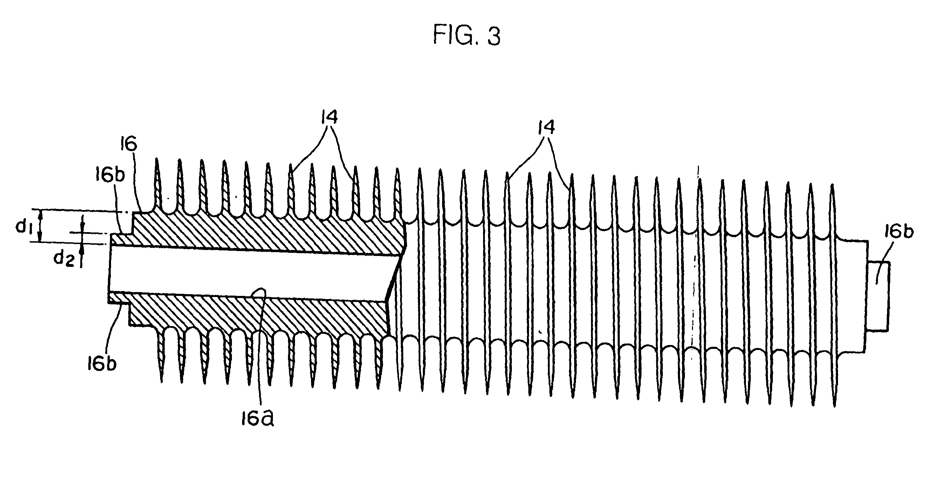

Structural details of the water pipe 13, the heat-absorbing fins 14, and the fin tubes 16 of the auxiliary heat exchanger 15, and a process of attaching them to the second casing member 3b will be described in detail below with reference to FIGS. 3 through 5.

As shown in FIG. 3, each of the fin tubes 16 has a hollow 16a defined longitudinally therethrough, and has a plurality of parallel vertical heat-absorbing fins 14 extending substantially perpendicularly to the longitudinal direction of the fin tube 16. A fin tube 16 has a wall thickness d₁ ranging from 2 to 10 mm, e.g., a wall thickness d₁ of 7 mm. A fin tube 16 has opposite ends 16b each having a wall thickness d₂ of 2 mm, for example, smaller than the wall thickness d₁, for allowing itself to be crimped easily.

Aluminum alloy forms an oxide film on its surface. The formed oxide film is dissolved by the drain produced by the auxiliary heat exchanger 15. However, since the oxide film is immediately regenerated by the aluminum alloy, an inner non-oxidized portion of the aluminum alloy can be protected against oxidization. The oxide film suffers corrosion at a low rate while being repeatedly dissolved and regenerated, the low rate being about 0.1 mm/year on the average of various aluminum alloys. Therefore, a fin tube 16 having the wall thickness d₁ in the above range exhibits corrosion resistance over a long period of time. While the wall thickness d₂ of each of the ends 16b of a fin tube 16 is smaller than the wall thickness d₁, since the ends 16b are attached to the second casing member 3b, the ends 16b are protected by the second casing member 3b for sufficient corrosion resistance.

The heat-absorbing fins 14 may be dissolved away by the drain. However, the fin tubes 16 alone have a sufficient heat-absorbing capability, the heat exchange capability of the auxiliary heat exchanger 15 will not be impaired. The aluminum alloy of the heat-absorbing fins 14 which is dissolved by the drain is separated out as an oxide on the surfaces of the other heat-absorbing fins 14 and the fin tubes 16. However, the aluminum oxide thus separated out does not tend to form a clog between the heat-absorbing fins 14 as it is repeatedly dissolved and regenerated.

Each of the fin tubes 16 with the heat-absorbing fins 14 integrally thereon may easily be manufactured according to a rolling process by placing a blank tube of aluminum alloy between a pair of dies and rotating the blank tube with the dies.

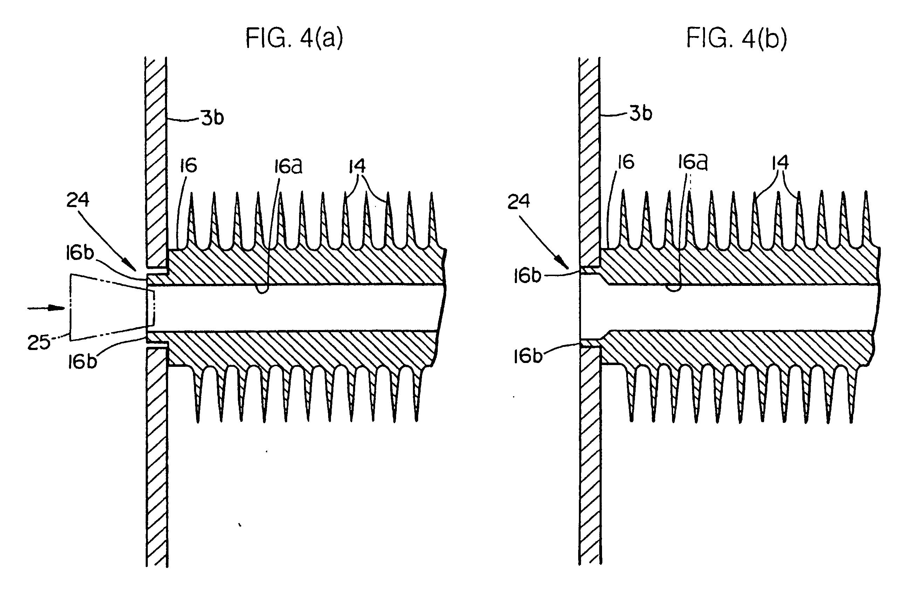

As shown in FIG. 4(a), each of the ends 16b of the fin tubes 16 is put in an attachment hole 24 defined in the second casing member 3b, the attachment hole 24 having a diameter slightly greater than the outside diameter of the end 16b and smaller than the outside diameter of the fin tube 16.

A punch 25, indicated by the imaginary line in FIG. 4(a) is thrust into the hollow 16a from outside of the second casing member 3b to spread the end 16b radially outwardly for thereby crimping the end 16b on the circumferential edge of the attachment hole 24. As a result, as shown in FIG. 4(b), each fin tube 16 is secured to the second casing member 3b in intimate contact therewith for reliably preventing exhaust gases from leaking out of the second casing member 3b.

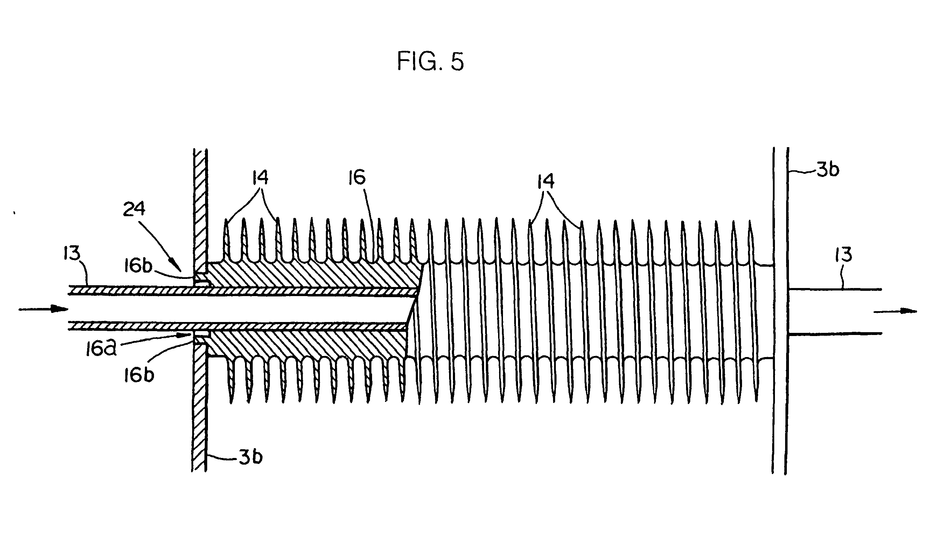

With fin tubes 16 attached to the second casing member 3b, the water pipe 13 is inserted into and fitted in the hollows 16a in the fin tubes 16, as shown in FIG. 5, and held against the inner surfaces of the fin tubes 16, thereby completing the auxiliary heat exchanger 15.

Operation of the heat exchanger apparatus will be described below.

When water starts flowing into the water supply pipe 17, a water flow sensor or the like (not shown) detects the water in the water supply pipe 17, and sends a signal to start supplying a fuel gas from the gas pipe 5 to the mixed gas supply unit 7 and start supplying combustion air from the air fans 6 to the mixed gas supply unit 7. In the mixed gas supply unit 7, the fuel gas and the combustion air are mixed at a predetermined ratio into a mixed gas, which is ejected downwardly from the gas burner 4. Then, the gas burner 4 is ignited by the igniter or the like (not shown) to start to burn the mixed gas.

Exhaust gases produced by the combustion of the mixed gas are guided by the first casing member 3a extending downwardly from the gas burner 4, and sensible heat of the exhaust gases is absorbed by the water pipe 10 and the heat-absorbing fins 11 of the main heat exchanger 12. The main heat exchanger 12 heats the water flowing through the water pipes 10 with the absorbed sensible heat.

Since the first casing member 3a is made of copper having excellent heat conductivity, it can discharge extra heat of the exhaust gases out of the casing 3a, and is prevented from being deteriorated by overheating. The heat dissipated by the first casing member 3a is retrieved by the water pipe 18 disposed around the first casing member 3a in contact with its outer surface, thus heating the water flowing through the water pipe 18.

The exhaust gases are then guided into the second casing member 3b connected to the lower end of the first casing member 3a, and remaining sensible heat and latent heat of the exhaust gases are absorbed by the heat-absorbing fins 14 and the fin tubes 16 of the auxiliary heat exchanger 15. The auxiliary heat exchanger 15 transfers the absorbed remaining sensible heat and latent heat to the water pipe 13 in the fin tubes 16, thereby heating the water flowing through the water pipe 13.

As a result, the water supplied from the water supply pipe 17 is heated into hot water as it flows successively through the water pipe 13, the water pipe 10, and the water pipe 18, and the hot water is supplied via the hot water discharge pipe 19 to a kitchen, a bath room, or the like.

Since the latent heat is removed from the exhaust gases by the auxiliary heat exchanger 15, the water vapor contained in the exhaust gases is liquefied into a drain. The cooled exhaust gases are discharged through the exhaust gas tube 20 out of the gas outlet 21. The drain flows along the inner wall surface of the second casing member 3b, the heat-absorbing fins 14, and the fin tubes 16 to the bottom of the exhaust gas tube 20, and finally along the slanted surface 22 to the drain port 23, from which the drain is discharged out.

The drain exhibits strong acidity because it contains sulfur oxides and nitrogen oxides dissolved from the exhaust gases, and hence tends to corrode the metal of the second casing member 3b, the heat-absorbing fins 14, and the fin tubes 16 before it is discharged from the drain port 23. However, because the second casing member 3b, the heat-absorbing fins 14, and the fin tubes 16 are made of the aluminum alloy, they have an aluminum oxide film formed on their surfaces. Consequently, the second casing member 3b, the heat-absorbing fins 14, and the fin tubes 16 themselves protect themselves against corrosion due to the strongly acid drain. The fine tubes 16 are also effective to protect the water pipe 13 of copper fitted therein against corrosion due to the strongly acid drain.

The second casing member 3b is made of aluminum alloy, and the first casing member 3a is made of copper. Though they are made of different metals, they are connected to each other with the gasket of glass wool or the like interposed therebetween. Even if a drain is produced at the junction between the first and second casing members 3a, 3b, the gasket of glass wool or the like is effective to prevent a partial cell from being formed between the first and second casing members 3a, 3b and hence to prevent them from being electrochemically corroded.

The exhaust gas tube 20 connected to the lower end of the second casing member 3b is made of stainless steel, and the second casing member 3b is made of aluminum alloy. Though they are made of different metals, they are connected to each other with the gasket of synthetic rubber such as silicone rubber, EPDM, etc. interposed therebetween. Even if a drain is produced at the junction between the second casing member 3b and the exhaust gas tube 20, the gasket of synthetic rubber such as silicone rubber, EPDM, etc. is effective to prevent a partial cell from being formed between the second casing member 3b and the exhaust gas tube 20 and hence to prevent them from being electrochemically corroded.

The water pipes 10, 13 are made of the same metal, i.e., copper. Therefore, no partial cell is formed at the junction between the water pipes 10, 13, and hence the water pipes 10, 13 are prevented from being electrochemically corroded.

The ends 16b of the fin tubes 16 are held in intimate contact with the outer edges of the attachment holes 24 in the second casing member 3b by crimping. Since the fine tubes 16 and the second casing member 3b are made of the same aluminum alloy, no partial cell is formed at the junction between the fine tubes 16 and the second casing member 3b, and hence the they are prevented from being electrochemically corroded.

Therefore, the heat exchanger apparatus according to the illustrated embodiment is prevented from being corroded by a strongly acid drain produced from exhaust gases and also being electrochemically corroded.

Although a certain preferred embodiment of the present invention has been shown and described in detail, it should be understood that various changes and modifications may be made therein without departing from the scope of the appended claims.

## Claims

1. A heat exchanger apparatus comprising:
a combustion device (2);
a casing (3) connected to said combustion device (2) which serves as a passage for guiding exhaust gases discharged from said combustion device (2);
a main heat exchanger (12) disposed in an upstream position in said passage and comprising a first water pipe (10) and a plurality of first heat-absorbing fins (11) for absorbing sensible heat from the exhaust gases;
an auxiliary heat exchanger (15) disposed in a down-stream position in said passage and comprising a second water pipe (13) connected to said first water pipe (10) and a plurality of second heat-absorbing fins (14) disposed around said second water pipe (13), for absorbing remaining sensible heat and latent heat from the exhaust gases;
water supply means (17) for supplying water to said auxiliary heat exchanger (15); and
hot water discharging means (19, 18) for discharging hot water from said main heat exchanger (12);
**characterised in that** said auxiliary heat exchanger (15) further comprises a plurality of fin tubes (16) which are disposed between said second water pipe(s) (13) and said second heat absorbing fins wherein said fin tubes (16) and said second heat-absorbing fins (14) are made of an aluminium based metal and said first and second water pipes (10, 13) are made of the same copper based metal.

2. A heat exchanger apparatus according to claim 1, wherein said fin tubes (16) have a wall thickness ranging from 2 to 10 mm.

3. A heat exchanger apparatus according to claim 1 or 2, wherein said casing (3) comprises a first casing member (3a) made of a copper-based metal and housing said main heat exchanger (12) and a second casing member (3b) made of an aluminium-based metal and housing said auxiliary heat exchanger (15), said second casing member (3b) being connected to said first casing member (3a) with an insulating gasket interposed therebetween.

4. A heat exchanger apparatus according to claim 3, wherein said fin tubes(16) have opposite ends which spread radially outwardly and are crimped in place in respective attachment holes defined in said second casing member (3b), said second casing member (3b) being made of the same aluminium-based metal as said fin tubes (16).

## Patentansprüche

1. Wärmetauschgerät, umfassend:
eine Brennvorrichtung (2);
ein an die Brennvorrichtung (2) angeschlossenes Gehäuse (3), das als Durchlass zum Hindurchschleusen von Abgasen dient, die aus der Brennvorrichtung (2) abgelassen werden;
einen Hauptwärmetauscher (12), der sich in einer stromaufwärts befindlichen Position in dem Durchlass befindet und der umfasst ein erstes Wasserrohr (10) und eine Vielzahl von ersten wärmeabsorbierenden Lamellen (11) zum Absorbieren spürbarer Wärme aus den Abgasen;
einen Hilfswärmetauscher (15), der sich in einer stromabwärts befindlichen Position in dem Durchlass befindet und der umfasst ein an das erste Wasserrohr (10) angeschlossenes zweites Wasserrohr (13) und eine Vielzahl von zweiten wärmeabsorbierenden Lamellen (14), die sich um das zweite Wasserrohr (13) befinden, zum Absorbieren spürbarer Restwärme und latenter Wärme aus den Abgasen;
Wasserzufuhrvorrichtungen (17) zum Versorgen des Hilfswärmetauschers (15) mit Wasser; und
Warmwasserablassvorrichtungen (19, 18) zum Ablassen von warmem Wasser aus dem Hauptwärmetauscher (12);
**dadurch gekennzeichnet, dass**
der Hilfswärmetauscher (15) zudem umfasst eine Vielzahl von Lamellenrohren (16), die sich zwischen dem oder den zweiten Wasserrohren (13) und den zweiten wärmeabsorbierenden Lamellen befinden, wobei die Lamellenrohre (16) und die zweiten wärmeabsorbierenden Lamellen (14) aus einem Metall auf Aluminiumbasis bestehen, und die ersten und zweiten Wasserrohre (10, 13) aus dem gleichen Metall auf Kupferbasis bestehen.

2. Wärmetauschgerät nach Anspruch 1, wobei die Lamellenrohre (16) eine Wandstärke im Bereich von 2 bis 10 mm besitzen.

3. Wärmetauschgerät nach Anspruch 1 oder 2, wobei das Gehäuse (3) umfasst ein erstes Gehäusebauteil (3a) aus einem Metall auf Kupferbasis, das den Hauptwärmetauscher (12) birgt, und ein zweites Gehäusebauteil (3b) aus einem Metall auf Aluminiumbasis, das den Hilfswärmetauscher (15) birgt, wobei das zweite Gehäusebauteil (3b) an das erste Gehäusebauteil (3a) angeschlossen ist und sich dazwischen eine isolierende Dichtung befindet.

4. Wärmetauschgerät nach Anspruch 3, wobei die Lamellenrohre (16) gegenüberliegende Enden aufweisen, die sich radial nach außen erstrecken, und die an der Stelle der jeweiligen Befestigungslöcher, die sich in dem zweiten Gehäusebauteil (3b) befinden, gebördelt sind, wobei das zweite Gehäusebauteil (3b) aus dem gleichen Metall auf Aluminiumbasis besteht, wie die Lamellenrohre (16).

## Revendications

1. Dispositif échangeur de chaleur, comprenant :
un dispositif de combustion (2) ;
un boîtier (3) connecté audit dispositif de combustion (2), lequel sert de passage pour le guidage des gaz d'échappement évacués dudit dispositif de combustion (2) ;
un échangeur de chaleur principal (12) disposé en une position en amont dans ledit passage et comprenant un premier tube à eau (10) et une pluralité de premières ailettes d'absorption de chaleur (11) destinées à absorber de la chaleur sensible desdits gaz d'échappement ;
un échangeur de chaleur auxiliaire (15) disposé en une position en aval dans ledit passage et comprenant un deuxième tube à eau (13) connecté audit premier tube à eau (10) et une pluralité de deuxièmes ailettes d'absorption de chaleur (14) disposées autour dudit deuxième tube à eau (13), destinées à absorber la chaleur sensible restante et la chaleur latente desdits gaz d'échappement ;
un moyen d'alimentation d'eau (17) destiné à alimenter de l'eau vers ledit échangeur de chaleur auxiliaire (15) ; et
un moyen d'évacuation d'eau chaude (19, 18) destiné à évacuer l'eau chaude dudit échangeur de chaleur principal (12) ;
**caractérisé par le fait que** ledit échangeur de chaleur auxiliaire (15) comprend, par ailleurs, une pluralité de tubes à ailettes (16) qui sont disposés entre ledit deuxième tube à eau (13) et lesdites deuxièmes ailettes d'absorption de chaleur, dans lequel lesdits tubes à ailettes (16) et lesdites deuxièmes ailettes d'absorption de chaleur (14) sont réalisés en métal à base d'aluminium et lesdits premier et deuxième tubes à eau (10, 13) sont réalisés dans le même métal à base de cuivre.

2. Dispositif échangeur de chaleur selon la revendication 1, dans lequel lesdits tubes à ailettes (16) ont une épaisseur de paroi allant de 2 à 10 mm.

3. Dispositif échangeur de chaleur selon la revendication 1 ou 2, dans lequel ledit boîtier (3) comprend un premier élément de boîtier (3a) réalisé en métal à base de cuivre et abritant ledit échangeur de chaleur principal (12) et un deuxième élément de boîtier (3b) réalisé en métal à base de cuivre et abritant ledit échangeur de chaleur auxiliaire (15), ledit deuxième élément de boîtier (3b) étant connecté audit premier élément de boîtier (3a) avec un joint isolant interposé entre eux.

4. Dispositif échangeur de chaleur selon la revendication 3, dans lequel lesdits tubes à ailettes présentent des extrémités opposées qui s'étendent radialement vers l'extérieur et qui sont serties en places dans des trous de fixation respectifs définis dans ledit deuxième élément de boîtier (3b), ledit deuxième élément de boîtier (3b) étant réalisé dans le même métal à base d'aluminium que lesdits tubes à ailettes (16).
